# DEMANDE DE BREVET EUROPEEN

(11) **EP 1 156 066 A1**
(43) Date de publication de la demande: **21.11.2001**
(21) Numéro de dépôt: 01401126.6
(22) Date de dépôt: 30.04.2001
(51) Int. Cl.: C08F 8/42

(54) **Composition à propriétés thermomécaniques améliorées et procédé pour sa réticulation**

(30) Priorité: 05.05.2000 FR 0005775
(71) Demandeur: Nexans, 75008 Paris (FR)
(72) Inventeur: Fomperie, Lionel, 78160 Auffargis (FR); Prigent, Madeleine, 91460 Marcoussis (FR)
(74) Mandataire: Feray, Valérie

(57) **Abrégé**

La présente invention se rapporte à une composition extrudable et réticulable à l'air. La composition extrudable et réticulable à l'air comprend un mélange d'un copolymère avec un composé à insaturation éthylénique et un ester insaturé, un composé silane hydrolysable exempt d'insaturation éthylénique contenant des groupements fonctionnels et un polymère thermoplastique dépourvu de groupements fonctionnels, lesdits groupements fonctionnels de l'ester étant sélectivement réactifs avec des groupements fonctionnels du composé silane.

Une telle composition est employée dans la fabrication d'un matériau d'isolation ou de gainage d'un câble d'énergie, notamment les câbles moyenne tension et les câbles de tension inférieure à 20 KV.

L'invention concerne également un procédé permettant la réticulation de cette composition ainsi que les câbles d'énergie comprenant un isolant et/ou une gaine contenant la composition obtenue par ce procédé.

## Description

La présente invention se rapporte à une composition extrudable et réticulable à l'air ainsi qu'un procédé permettant la réticulation de cette composition.

Cette composition est destinée à être employée dans la fabrication de matériau de gainage de câbles d'énergie moyenne et basse tension ou de câbles de télécommunications. Ces câbles transportent du courant continu ou alternatif. Les câbles moyenne tension sont généralement constitués d'une âme conductrice entourée d'une structure d'isolement qui lui est coaxiale. Cette structure comporte au moins une première couche semi-conductrice placée au contact de l'âme du câble, elle-même entourée d'une deuxième couche électriquement isolante, à son tour recouverte par une troisième couche semi-conductrice. Les couches extérieures sont des gaines qui servent à la protection du câble. Les câbles basse tension (inférieure à 20 KV) comporte une âme conductrice entourée d'une structure d'isolement qui lui est coaxiale et recouverte d'une gaine. Cette composition est aussi utilisable comme matériau d'isolation.

Dans le cas d'un court-circuit survenant dans le câble, des températures atteignant localement 200 °C peuvent être observées. A ces températures et sous contrainte, il se produit une déformation ou fluage du matériau. L'évaluation de cet allongement à chaud ("hot set test") s'effectue dans les conditions définies dans la norme NF EN 60811-2-1. On cherche des compositions qui présentent de bons résultats au "hot set test".

Le document WO-8805449 propose en relation avec ses exemples 11 et 12 une composition extrudable qui comprend un mélange d'un copolymère d'un composé à insaturation éthylénique et d'un ester insaturé contenant un acrylate tel qu'un éthylène butylacrylate EBA (exemple 11) ou un éthylène méthyllacrylate EMA (exemple 11) avec un composé silane hydrolysable exempt d'insaturation éthylénique tel qu'un 3-aminopropyltriméthoxysilane (MEAM) et en outre avec un polymère thermoplastique dépourvu de groupements fonctionnels tel qu'un polyéthylène homopolymère LPDE.

Le matériau obtenu possède une bonne adhésivité sur des métaux ou des substances polaires et est employé à cet effet dans des câbles. Cependant, ce matériau n'est pas réticulable.

Le document EP-0 802 224 décrit une composition extrudable et réticulable, constituée par un mélange comprenant un matériau polymère thermoplastique, un composé silane hydrolysable, un élastomère non réticulé et un agent de réticulation. Le matériau polymère thermoplastique et le composé silane hydrolysable portent respectivement des groupements fonctionnels réactifs les uns avec les autres pour leur réaction sélective. L'élastomère est réticulé dynamiquement sélectivement par l'agent de réticulation dans le mélange. Le matériau polymère thermoplastique portant des groupements fonctionnels réactifs est un produit du commerce, de préférence du polyéthylène greffé par l'anhydride maléique. Le composé silane est de préférence un aminoalcoxysilane. Les groupements amine du composé silane réagissent sélectivement sur les groupements anhydride maléique du polyéthylène et les groupements alcoxy du composé silane réagissent avec les groupements hydroxyles superficiels de la charge. L'élastomère est un copolymère d'éthylène et d'acétate de vinyle (EVA) qui est réticulé dynamiquement et sélectivement par l'agent de réticulation.

La particularité de cette composition est le choix des constituants de base qui ont des cinétiques réactionnelles spécifiques et différentes dans le mélange, permettant de réaliser la composition en une seule étape. De ce fait, le choix des constituants de base se trouve très restreint et leur coût est élevé.

La présente invention a pour but de proposer une composition extrudable et réticulable à l'air donnant un matériau réticulé qui soit recyclable et dont la fabrication est plus simple et d'un coût moins élevé que les compositions connues.

Un premier objet de la présente invention est donc une composition extrudable et réticulable à l'air, comprenant un mélange :
- d'un copolymère d'un composé à insaturation éthylénique et d'un ester insaturé ;
- d'un composé silane hydrolysable exempt d'insaturation éthylénique contenant des groupements fonctionnels ;
- d'un polymère thermoplastique ;
**caractérisée en ce que** lesdits groupements fonctionnels dudit ester sont sélectivement réactifs avec des groupements fonctionnels dudit composé silane et en ce que ledit polymère thermoplastique est dépourvu de groupements fonctionnels.

L'invention est basée sur la découverte que dans certaines conditions, il semble se produire une réaction sélective entre les groupements fonctionnels de l'ester du copolymère et les groupements fonctionnels réactifs portés par le silane.

La composition selon l'invention comprend un polymère thermoplastique dépourvu de groupements fonctionnels susceptibles d'interférer avec la réaction entre le silane et le copolymère intervenant dans la réticulation de la composition. Ce polymère thermoplastique confère à la composition selon l'invention des bonnes propriétés mécaniques car il contribue à renforcer sa structure.

La présente invention permet d'utiliser une vaste gamme de composés silanes. Elle ne nécessite pas en outre de recourir à des polymères ayant des groupes fonctionnels spécifiques et par conséquent, elle permet d'employer une vaste gamme de polymères, en particulier, les plus répandus et les moins coûteux.

La présente invention permet d'obtenir une composition ayant une tenue élevée au fluage avec la température.

De plus, une composition selon l'invention permet d'obtenir des produits finis qui sont recyclables. Elle permet en outre d'obtenir facilement des produits finis ayant une grande souplesse, tels que par exemple des câbles à base essentiellement de (poly)acétate de vinyle.

Un second objet de la présente invention est un procédé de préparation d'une composition, qui permet la réticulation de la composition selon l'invention comprenant notamment une étape dite de réticulation dynamique.

Cette étape permet notamment d'allonger les chaînes du polymère et du copolymère et ainsi de réduire le nombre de chaînes. Cette étape permet de cette façon d'améliorer la compatibilité entre le polymère et le copolymère en favorisant la réticulation de la composition.

La présente invention a encore pour objet un câble dont l'isolant et/ou la gaine contient la composition obtenue par ce procédé.

D'autres caractéristiques et avantages de l'invention vont maintenant être décrits en détail dans l'exposé qui suit donné à titre illustratif et nullement limitatif.

### Composition selon l'invention

Une composition selon l'invention comprend notamment un copolymère d'un composé à insaturation éthylénique et un ester insaturé.

La réaction sélective entre le silane et l'ester à la base de l'invention peut être illustrée par le schéma :

SiX₄ + 4 RCOOR' → Si(OR')₄ + 4 RCOX

dans lequel :
X représente un groupement fonctionnel porté par le silane SiX₄; et
RCOOR' représente un fragment du copolymère d'un composé à insaturation éthylénique et d'un ester insaturé.

Selon l'invention, l'ester insaturé du copolymère répond en général à la formule R₁COOR₂, dans laquelle
R₁ est un groupement alkyle ayant de préférence de 1 à 4 atomes de carbone et
R₂ est un groupement alkylène ayant de préférence de 2 à 4 atomes de carbone.

Avantageusement, les groupements fonctionnels de l'ester selon l'invention peuvent comprendre des acétates. En effet les acétates favorisent la réaction mentionnée ci-dessus contrairement à d'autres groupements tels que les acrylates.

De préférence, une composition selon l'invention peut comprendre aussi un agent de réticulation qui peut être notamment un peroxyde, une résine phénolique, un dérivé soufré ou un mélange de ces composés. La composition selon l'invention contient en général de 0,5 à 7 parties en poids et de préférence 0,5 à 3 parties en poids dudit agent de réticulation.

Selon l'invention, le composé à insaturation éthylénique est de préférence de l'éthylène.

Comme exemples de copolymères entrant dans la composition selon l'invention, on peut citer les copolymères d'éthylène et d'acétate de vinyle (EVA), les copolymères d'éthylène et de propionate de vinyle, les copolymères d'éthylène et d'acétate d'allyle, les copolymères d'éthylène et de propionate d'allyle.

On utilise de préférence un copolymère d'éthylène et d'acétate de vinyle (EVA) renfermant jusqu'à 80% en poids d'acétate de vinyle et tout spécialement un EVA renfermant entre 10 et 70% en poids d'acétate de vinyle.

Pour ce qui est des proportions, la composition selon l'invention comprend généralement de 25 à 95 parties et de préférence de 30 à 85 parties en poids de copolymère.
Dans un mode de réalisation, le silane hydrolysable exempt d'insaturation éthylénique selon l'invention peut être un trialcoxysilane ou un tétraalcoxysilane, tel que le tétraéthoxysilane.

De préférence, on utilise un silane comportant une fonction amino, tel qu'un aminotrialcoxysilane. Comme exemple d'un tel silane, on peut citer l'aminopropyltriéthoxysilane et l'aminopropyltriméthoxysilane.

La composition selon l'invention comprend généralement de 0,5 à 5 parties et de préférence de 0,7 à 4 parties en poids de composé silane.

Par "composé silane portant des groupements sélectivement réactifs avec les groupements fonctionnels de l'ester du copolymère" on entend dans la présente invention un composé qui, dans les conditions réactionnelles, est capable de réagir essentiellement avec les groupements fonctionnels de l'ester du copolymère selon le schéma indiqué ci-dessus. Ainsi, on entend que la composition puisse comprendre d'autres composés réactifs, qui n'interfèrent pas sensiblement avec cette réaction sélective entre les groupes réactifs du silane et du copolymère.

Le polymère thermoplastique dépourvu de groupements fonctionnels peut être un homopolymère d'une oléfine ayant de 2 à 6 atomes de carbone et un copolymère de deux oléfines ayant chacune de 2 à 6 atomes de carbone, ces oléfines pouvant être par exemple, l'éthylène, le propylène, le butène, le pentène, l'hexène, l'isobutylène, le méthyl-butène, le méthyl-pentène, le diméthyl-butène ou l'éthyl-butène. En général, on utilise du polyéthylène, de préférence du polyéthylène haute densité (PEHD).

La proportion de polymère dépourvu de groupement fonctionnel dans la composition est généralement de 0,5 à 75 parties en poids.

Dans un mode de réalisation préféré, la composition selon l'invention peut également comprendre une charge.

Cette charge est de préférence une charge non réactive en surface, telle que de la craie, du noir de carbone, de la magnésie non réactive ou de l'argile naturelle ou synthétique.

La proportion de cette charge non réactive en surface dans la composition n'est pas cruciale. Elle est généralement de 0 à 230 parties en poids et le plus souvent de 0 à 180 parties en poids.

La composition selon l'invention ne nécessite pas de recourir à des charges ayant des surfaces réactives et par conséquent, elle permet d'employer une vaste gamme de charges, en particulier, les plus répandues et les moins coûteuses.

Selon une variante, la composition selon l'invention peut aussi contenir une charge réactive en surface, du type de celle utilisée dans la demande EP-A-0 802 223 au nom de la demanderesse. Cette charge peut être magnésie réactive, alumine, kaolin, mica. La charge étant réactive en surface, elle est susceptible d'interférer avec la réaction entre le silane et le copolymère.

En général, la teneur en cette charge réactive en surface est inférieure à 250 parties en poids, de préférence inférieure à 160 parties en poids.

De préférence, la composition est exempte de charge réactive en surface.

De manière avantageuse, la composition selon l'invention peut comprendre en outre un catalyseur de la réaction entre le ou les groupements fonctionnels du silane et les groupements fonctionnels de l'ester du copolymère.

Un tel catalyseur peut être une base telle qu'une amine, un sel d'étain ou une molécule comprenant au moins un atome d'étain.

La proportion de ce catalyseur dans la composition selon l'invention est généralement comprise entre 0 et 500 ppm et le plus souvent entre 0 et 100 ppm.

Bien entendu, la composition selon l'invention peut comprendre divers additifs qui sont habituellement utilisés dans la fabrication de copolymères réticulés. Comme exemples de tels additifs, on peut citer les anti-oxydants, les retardateurs de flamme, des anti-UV, des plastifiants, des colorants.

La proportion de ces divers additifs dans la composition selon l'invention est généralement comprise entre 0 et 5 parties en poids et le plus souvent entre 0,1 et 2 parties en poids.

La composition selon l'invention, une fois réticulée, ne présente pas d'allongement significatif après 15 minutes à 200°C sous une contrainte de 0,2 MPa, conditions définies par la norme NF EN 60811-2-1, après un stockage à l'air libre sans précautions particulières pendant une semaine.

Elle possède de préférence une dureté SHORE A inférieure à 95.

De préférence elle présente un allongement à la rupture supérieur à 130%, et de préférence encore au moins égal à 150%.

La résistance à la rupture de la composition réticulée selon l'invention est de préférence supérieure à 7 Mpa.

### Procédé selon l'invention

La préparation d'une composition selon l'invention réticulée peut comprendre une étape de réticulation dynamique en présence du copolymère et du polymère thermoplastique.

Dans ce cas, un cisaillement est créé par malaxage du copolymère et du polymère thermoplastique, durant l'étape d'élaboration du mélange ou "compoundage"par exemple dans une extrudeuse à double-vis corotative ou bien en mélangeur interne.

L'ajout d'un peroxyde ou d'un autre agent de réticulation permet alors d'améliorer la compatibilité des différents polymères en allongeant les chaînes du polymère et du copolymère et en réduisant ainsi le nombre de chaînes. Ceci réduit le nombre de ponts de réticulation nécessaires à la réticulation du matériau selon l'invention.

La réticulation dynamique s'initie en général à une température supérieure à 150°C et de préférence comprise entre 170 et 230 °C et sous un cisaillement important, c'est-à-dire supérieur à 20 s⁻¹ et de préférence compris entre 50 et 250 s⁻¹.

Le silane peut être incorporé durant le "compoundage" ou de préférence durant l'étape d'extrusion de la composition. On laisse ensuite généralement la réticulation, qui a démarré à la température et sous le cisaillement qui viennent d'être indiqués, se poursuivre à l'air libre. La poursuite de réticulation à l'air libre est comprise entre quelques heures et quelques jours.

### Produits finis

De préférence, la réticulation dynamique peut être effectuée dans des conditions permettant l'obtention d'une composition réticulée ayant une dureté SHORE A inférieure à 95.

L'extrusion de la composition selon l'invention peut avantageusement être réalisée d'une façon appropriée pour produire divers produits quasi-finis, qui, une fois la réticulation achevée deviennent des produits finis bénéficiant des propriétés mécaniques et de résistance à la chaleur que possède la composition selon l'invention réticulée.

Comme exemples de tels produits finis, on peut mentionner les câbles d'énergie dont l'isolant et/ou la gaine est constitué(e) de la composition selon l'invention réticulée.

L'isolant et/ou la gaine ne présente pas d'allongement significatif après 15 minutes à 200°C sous une contrainte de 0,2 MPa, conditions définies par la norme NF EN 60811-2-1, après un stockage à l'air libre sans précautions particulières pendant une semaine.

Leur dureté SHORE A est de préférence inférieure à 95 ; leur allongement à la rupture est de préférence supérieur à 130%, et de préférence encore au moins égal à 150%. Et leur résistance à la rupture est de préférence supérieure à 7 Mpa.

### Exemples

Les exemples suivants sont donnés à titre uniquement illustratif, et n'ont aucun caractère limitatif.

### Exemple 1

On mélange, extrude et laisse réticuler à l'air libre sans précautions particulières une formulation selon l'invention, puis on mesure sa résistance à la rupture (R, en MPa), son allongement à la rupture (A, en %), sa tenue (ou non-tenue) au fluage ou déformation selon la norme NF EN 60811-2-1 (HST) et sa dureté SHORE A selon la norme NF 51-109. La composition de la formulation ainsi que les résultats des mesures sont consignés dans le tableau suivant :

| **COMPOSANTS** | |
|---|---|
| Lepraven 500 | 83 |
| HDPE 47100 | 17 |
| Magnifin H10 | 100 |
| Santonox TBMC | 0,5 |
| Trigonox 145-45pd | 1,4 |
| Aminopropyltriéthoxysilane | 1,5 |
| | |

| **PROPRIETES** | |
|---|---|
| R (Mpa) | 10,5 |
| A (%) | 210 |
| HST (200°C/0,2 Mpa/15 mn) | Oui |
| Dureté SHORE A | 74 |

On constate que les propriétés thermomécaniques ainsi que la tenue au fluage ou déformation sont bonnes. La dureté SHORE A est faible, ce qui est avantageux, notamment dans le cas d'une utilisation comme gaine ou isolant pour câbles. De plus, la composition obtenue possède une bonne résistance à la pression à chaud (110°C).

Cette composition réticulée peut être ensuite remise en oeuvre (extrudée à nouveau) après au moins trois mois de stockage à l'air ambiant et conserve des propriétés mécaniques semblables à celle décrites précédemment.

### Exemple 2

De manière analogue à l'exemple 1, on mélange, extrude et laisse réticuler à l'air libre sans précautions particulières une formulation selon l'invention, puis on mesure sa résistance à la rupture (R, en MPa), son allongement à la rupture (A, en %), sa tenue (ou non-tenue) au fluage ou déformation selon la norme NF EN 60811-2-1 (HST) et sa dureté SHORE A selon la norme NF 51-109.

La composition de la formulation ainsi que les résultats des mesures sont consignés dans le tableau suivant :

| **COMPOSANTS** | |
|---|---|
| Elvax 260 | 20 |
| Elvax 40l03 | 60 |
| HDPE 47100 | 20 |
| Hydrofy G1,5 | 150 |
| Santonox TBMC | 0,5 |
| Trigonox 145-45pd | 1 |
| Aminopropyltriethoxysilane | 2 |
| | |

| **PROPRIETES** | |
|---|---|
| R (Mpa) | 13 |
| A (%) | 150 |
| HST (200°C/0,2 Mpa/15 mn) | Oui |
| Dureté SHORE A | 92 |

### Exemple 3

On mélange, extrude et laisse réticuler à l'air libre sans précautions particulières une composition selon l'art antérieur, puis on mesure sa résistance à la rupture (R, en MPa), son allongement à la rupture (A, en %), sa tenue (ou non-tenue) au fluage ou déformation selon la norme NF EN 60811-2-1 (HST) et sa dureté SHORE A selon la norme NF 51-109.

La composition de la formulation ainsi que les résultats des mesures sont consignés dans le tableau suivant :

| **COMPOSANTS** | |
|---|---|
| Elvax 260 | 20 |
| Elvax 40l03 | 60 |
| HDPE 47100 | 20 |
| Hydrofy G1,5 | 150 |
| Santonox TBMC | 0.5 |
| Trigonox 145-45pd | 1 |
| Vinyltriéthoxy silane | 2 |
| | |

| **PROPRIETES** | |
|---|---|
| R (Mpa) | 12 |
| A (%) | 160 |
| HST (200°C/0,2 Mpa/15 mn) | Non |
| Dureté SHORE A | 92 |

Sans traitement ultérieur (passage en étuve ou en piscine), la réticulation de ce matériau n'est pas achevée après une semaine.

### Exemple 4

On fabrique un câble d'énergie basse tension comportant une gaine extérieure constituée de la composition réticulée selon la présente invention.

On réalise un mélange des composants indiqués dans l'exemple 1 en mélangeur continu ou discontinu puis la composition est mise en oeuvre par extrusion, technique qui permet la transformation de granulé ou de bande de compound en produit fini ou semi-fini sous forme de revêtement pour câble. La matière est transportée à l'aide d'une vis de la zone d'alimentation jusqu'à la filière. La matière se plastifie sous l'action du malaxage induit par la rotation de la vis et de la chaleur apportée de l'extérieur. La pression augmente progressivement le long de la vis forçant ainsi la matière à passer par la filière pour lui donner une forme figée en sortie de cette dernière. Cette technique permet grâce à l'adaptation d'une tête de filière appropriée de recouvrir des fils cuivre ou des fils préalablement isolés.

On mesure sa résistance à la rupture (R, en MPa), son allongement à la rupture (A, en %), sa tenue (ou non-tenue) au fluage ou déformation selon la norme NF EN 60811-2-1 (HST) et sa dureté SHORE A selon la norme NF 51-109. Les résultats des mesures sont consignés dans le tableau suivant :

| **PROPRIETES** | |
|---|---|
| R (Mpa) | 13 |
| A (%) | 150 |
| HST (200°C/0,2 Mpa/15 mn) | Oui |
| Dureté SHORE A | 92 |

Le matériau formant la gaine du câble peut être ensuite remise en oeuvre, c'est à dire extrudé à nouveau pour former une nouvelle gaine, après six mois ou plus d'utilisation du câble. La gaine réalisée avec le matériau recyclé conserve des propriétés mécaniques semblables à celle de la première gaine.

Le composé silane hydrolysable exempt d'insaturation éthylénique, comme l'aminosilane peut être introduit dans la composition pendant l'étape d'élaboration du mélange ou "compoundage", ou bien durant l'extrusion.

### Exemple 5

On mélange, extrude et laisse réticuler à l'air libre sans précautions particulières une formulation selon l'invention, puis on mesure sa résistance à la rupture (R, en MPa), son allongement à la rupture (A, en %), sa tenue (ou non-tenue) au fluage ou déformation selon la norme NF EN 60811-2-1 (HST) et sa dureté SHORE A selon la norme NF 51-109.

La composition de la formulation ainsi que les résultats des mesures sont consignés dans le tableau suivant :

| **COMPOSANTS** | |
|---|---|
| Lepraven 700 | 66 |
| EVA 265 (à 26,5% d'acétate de vinyle) | 33 |
| HDPE 47100 | 0,5 |
| Magnifin H10 | 120 |
| Santonox TBMC | 0,5 |
| Trigonox 145-45pd | 1 |
| Aminopropyltriéthoxysilane | 2 |
| | |

| **PROPRIETES** | |
|---|---|
| R (Mpa) | 11 |
| A (%) | 190 |
| HST (200°C/0,2 Mpa/15 mn) | Oui |
| Dureté SHORE A | 78 |

On constate que les propriétés thermomécaniques ainsi que la tenue au fluage ou déformation sont bonnes. La dureté SHORE A est faible, ce qui est avantageux, notamment dans le cas d'une utilisation comme gaine ou isolant pour câbles. De plus, cette composition possède une bonne tenue à l'huile (24H/100°C) selon la norme ASTM n°2.

Cette composition réticulée peut être ensuite remise en oeuvre (extrudée à nouveau) après au moins trois mois de stockage à l'air ambiant et conserve des propriétés mécaniques semblables à celle décrites précédemment.

## Revendications

1. Composition extrudable et réticulable à l'air, comprenant un mélange :
- d'un copolymère d'un composé à insaturation éthylénique et d'un ester insaturé ;
- d'un composé silane hydrolysable exempt d'insaturation éthylénique contenant des groupements fonctionnels ;
- d'un polymère thermoplastique ;
**caractérisée en ce que** lesdits groupements fonctionnels dudit ester sont sélectivement réactifs avec des groupements fonctionnels dudit composé silane, et **en ce que** ledit polymère thermoplastique est dépourvu de groupements fonctionnels.

2. Composition selon la revendication 1 caractérisée en ce lesdits groupements fonctionnels dudit ester comprennent des acétates.

3. Composition selon l'une des revendication 1 ou 2, **caractérisée en ce qu'**elle comprend en outre un agent de réticulation.

4. Composition selon la revendication 3 **caractérisée en ce que** l'agent de réticulation est choisi dans un groupe comprenant des composés tels que des peroxydes, des résines phénoliques, des dérivés soufrés et des mélanges de ces composés.

5. Composition selon l'une des revendications 1 à 4, **caractérisée en ce que** ledit copolymère est un copolymère d'éthylène et d'acétate de vinyle.

6. Composition selon l'une des revendications 1 à 5, **caractérisée en ce que** ledit composé silane hydrolysable exempt d'insaturation éthylénique est un alcoxysilane.

7. Composition selon l'une des revendications 1 à 6, **caractérisée en ce que** ledit composé silane est un alcoxysilane comportant au moins une fonction amino, de préférence un aminopropyltriéthoxy silane.

8. Composition selon l'une des revendications 1 à 7, **caractérisée en ce que** ledit polymère thermoplastique est un polyéthylène.

9. Composition selon l'une des revendications 1 à 8, **caractérisée en ce qu'**elle comprend en outre une charge non réactive en surface.

10. Composition selon l'une des revendications 1 à 9, **caractérisée en ce qu'**elle comprend en outre un catalyseur de la réaction entre lesdits groupements fonctionnels dudit ester et desdits groupements fonctionnels du silane.

11. Composition selon l'une des revendications 1 à 10, caractérisée en qu'elle comprend :
de 25 à 95 parties en poids dudit copolymère ;
de 0,5 à 5 parties en poids dudit composé silane ;
de 0,5 à 7 parties en poids d'un agent de réticulation ;
de 0 à 230 parties en poids d'une charge non réactive en surface ; et
de 0,5 à 75 parties en poids dudit polymère thermoplastique dépourvu de groupements fonctionnels.

12. Composition l'une des revendications 1 à 11, caractérisée en qu'elle comprend :
de 30 à 85 parties en poids dudit copolymère ;
de 0,7 à 4 parties en poids dudit composé silane ;
de 0,5 à 3 parties en poids d'un agent de réticulation ;
de 0 à 180 parties en poids d'une charge non réactive en surface ; et
de 0,5 à 75 parties en poids dudit polymère thermoplastique dépourvu de groupements fonctionnels.

13. Composition l'une des revendications 1 à 12, **caractérisée en ce qu'**une fois réticulée, elle ne présente pas d'allongement significatif après 15 minutes à 200°C sous une contrainte de 0,2 MPa après un stockage à l'air libre sans précautions particulières pendant une semaine.

14. Composition selon la revendication 13, **caractérisée en ce qu'**elle possède une dureté SHORE A inférieure à 95.

15. Composition selon l'une des revendications 13 ou 14, **caractérisée en ce qu'**elle présente un allongement à la rupture supérieur à 130%.

16. Composition selon l'une des revendications 13 à 15, **caractérisée en ce qu'**elle possède une résistance à la rupture supérieure à 7 MPa.

17. Procédé de réticulation d'une composition selon l'une des revendications 1 à 16, comprenant une étape de réticulation dynamique.

18. Procédé selon la revendication 17, **caractérisé en ce que** la réticulation dynamique est réalisée par malaxage dudit copolymère et dudit polymère thermoplastique en présence d'un agent de réticulation qui est de préférence un peroxyde.

19. Procédé selon l'unes des revendications 17 ou 18, **caractérisé en ce que** la réticulation dynamique est initiée à une température supérieure à 150°C et sous un cisaillement supérieur à 20 s⁻¹.

20. Câble d'énergie comprenant un isolant et/ou une gaine contenant la composition obtenue par le procédé selon l'une des revendications 17 à 19.
